# EUROPEAN PATENT APPLICATION

(11) **EP 4 400 303 A1**
(43) Date of publication of application: **17.07.2024**
(21) Application number: 22864449.8
(22) Date of filing: 26.08.2022
(51) Int. Cl.: B32B 5/28, C09K 21/02

(54) **LAMINATE**

(30) Priority: 06.09.2021 JP 2021145047
(71) Applicant: SEKISUI CHEMICAL CO., LTD., Osaka-shi Osaka 530-8565 (JP)
(72) Inventor: USHIMI, Takehiko, Mishima-gun, Osaka 618-0021 (JP); MIYATA, Shingo, Hasuda-shi, Saitama 349-0198 (JP); TSUJII, Mika, Mishima-gun, Osaka 618-0021 (JP)
(74) Representative: Ter Meer Steinmeister & Partner
(86) International application number: PCT/JP2022/032284
(87) International publication number: WO 2023/032865

(57) **Abstract**

A laminated body (10) is a laminated body having a laminated structure of two or more layers, and has a fire-resistant layer (11) containing thermally expandable graphite and a fiber-reinforced plastic layer (20).

## Description

### Technical Field

The present invention relates to a laminated body having a fiber-reinforced plastic layer.

### Background Art

Fiber-reinforced plastics (hereinafter, referred to also as FRP) are paid attention to as high-strength materials taking the place of metals. FRP are generally low in flame retardancy and studies in order to enhance the flame retardancy have conventionally been made. For example, Patent Literature 1 discloses a fiber-reinforced plastic constituted of discontinuous reinforcing fibers and a flame-retardant thermoplastic resin such as a polyetherimide resin, a polysulfone resin, a polyethersulfone resin or a polyetheretherketone resin (for example, see Patent Literature 1).

As means to impart flame retardancy to plastics, inclusion of various flame retardants in plastics is broadly carried out.

### Citation List

### Patent Literature

PTL1: WO2019/107343

### Summary of Invention

### Technical Problem

On addition of a flame retardant to a plastic constituting an FRP, however, there arises a problem of the strength deterioration of the FRP; in particular, on exposure to fire, the deterioration of strength such as bending strength becomes liable to occur. As seen in Patent Literature 1, even when a flame -retardant thermoplastic resin is used for a plastic constituting FRP, securing the bending strength and simultaneously improving the fire resistance are difficult.

Then, the present invention is to make the fire resistance favorable and thereby highly hold the mechanical strength such as bending strength of an FRP even after exposure to fire.

### Solution to Problem

As a result of exhaustive studies, unexpectedly, the present inventors have found that by laminating a fire-resistant layer having a thermally expandable graphite on an FRP, the above problem can be solved, and have completed the following present invention. That is, the present invention provides the following [1] to [7].
[1] A laminated body having a multilayer structure of two or more layers, the laminated body having a fire-resistant layer containing a thermally expandable graphite, and a fiber-reinforced plastic layer.
[2] The laminated body according to the above [1], wherein reinforcing fibers contained in the fiber-reinforced plastic layer are at least one kind selected from the group consisting of carbon fibers and glass fibers.
[3] The laminated body according to the above [1] or [2], wherein the laminated body has an expansion height after a fire resistance test of 5 mm or higher.
[4] The laminated body according to any one of the above [1] to [3], wherein the fire-resistant layer further contains a binder.
[5] The laminated body according to the above [4], wherein the binder has at least one functional group selected from the group consisting of a chloro group, a bromo group, a cyano group, an ester group, an acetyl group and an ether group.
[6] The laminated body according to the above [4], wherein the binder has at least one functional group selected from the group consisting of a chloro group and a bromo group.
[7] The laminated body according to any one of the above [1] to [6], wherein the laminated body further has at least one of a resin layer, an adhesive layer and a base material layer.

### Advantageous Effects of Invention

According to the present invention, the fire resistance of an FRP is favorable and thereby the mechanical strength such as bending strength of the FRP can be held highly even after exposure to fire.

### Brief Description of Drawings

[Fig. 1] Fig. 1 is a schematic cross-sectional diagram showing a laminated body according to one embodiment of the present invention.
[Fig. 2] Fig. 2 is a schematic cross-sectional diagram showing a laminated body according to one embodiment of the present invention.
[Fig. 3] Fig. 3 is a schematic cross-sectional diagram showing a laminated body according to one embodiment of the present invention.
[Fig. 4] Fig. 4 is a schematic cross-sectional diagram showing a laminated body according to one embodiment of the present invention.
[Fig. 5] Fig. 5 is a schematic cross-sectional diagram showing a laminated body according to one embodiment of the present invention.
[Fig. 6] Fig. 6 is a schematic cross-sectional diagram showing a laminated body according to one embodiment of the present invention.
[Fig. 7] Fig. 7 is a schematic cross-sectional diagram showing a laminated body according to one embodiment of the present invention.
[Fig. 8] Fig. 8 is a schematic cross-sectional diagram showing a laminated body according to one embodiment of the present invention.

### Description of Embodiments

Hereinafter, the present invention will be described in more detail.

### <Laminated body>

The laminated body of the present invention is a laminated body having a multilayer structure of two or more layers, and the laminated body has a fire-resistant layer containing a thermally expandable graphite, and a fiber-reinforced plastic layer (FRP layer).

Because the laminated body of the present invention has the above-mentioned constitution, the fire resistance is favorable and thereby the mechanical strength such as bending strength of the FRP layer can be held high even after exposure to fire.

### [Fire-resistant layer]

The fire-resistant layer, as described above, contains a thermally expandable graphite. Due to that the fire-resistant layer contains a thermally expandable graphite, the fire-resistant layer expands on being heated and forms a thermally insulating layer and thereby the FRP is prevented from igniting or burning even when the laminated body is exposed to fire.

### (Thermally expandable graphite)

The thermally expandable graphite is a graphite interlayer compound formed by treating a powder of natural vein graphite, pyrolytic graphite, Kish graphite or the like with an inorganic acid and a strong oxidizing agent, and is a type of crystalline compound with a carbon layer structure being kept. The inorganic acid includes concentrated sulfuric acid, nitric acid and selenic acid. The strong oxidizing agent includes concentrated nitric acid, persulfate salts, perchloric acid, perchlorate salts, permanganate salts, bichromate salts and hydrogen peroxide.

The thermally expandable graphite obtained by an acid treatment as described above may further be subjected to a neutralization treatment with ammonia, an aliphatic lower amine, an alkali metal compound, an alkaline earth metal compound or the like.

The particle size of the thermally expandable graphite is preferably 20 to 200 mesh. When the particle size of the thermally expandable graphite is in the above range, it becomes easy for voids in a large volume to be produced by expansion, therefore, the fire resistance is improved. Further, the dispersing ability in the resin is also improved.

The mean aspect ratio of the thermally expandable graphite is preferably 2 or higher, more preferably 5 or higher and still more preferably 10 or higher. The mean aspect ratio of the thermally expandable graphite is not especially limited, but is, from the viewpoint of prevention of breakage of the thermally expandable graphite, preferably 1,000 or lower. Due to that the mean aspect ratio of the thermally expandable graphite is 2 or higher, since it becomes easy for voids in a large volume to be produced by expansion, the flame retardancy is improved.

The mean aspect ratio of the thermally expandable graphite is defined as the mean of values obtained by measuring the maximum dimension (length) and the minimum dimension (breadth) of each of 10 pieces of thermally expandable graphite, and dividing the maximum dimension (length) by the corresponding minimum dimension (breadth). The length and the breadth of the thermally expandable graphite can be measured, for example, by using a field emission scanning electron microscope (FE-SEM).

The expansion starting temperature of the thermally expandable graphite is preferably 100 to 300°C. By setting the expansion starting temperature at 100°C or higher, the expansion of the fire-resistant layer by heating other than fires can be prevented. Further, when the expansion starting temperature is 300°C or lower, the fire-resistant layer suitably expands by heating by fires, whereby the FRP layer can suitably be prevented from igniting or burning. From these viewpoints, the expansion starting temperature is more preferably 120 to 230°C and still more preferably 130 to 210°C.

The expansion starting temperature of the thermally expandable compound can be measured by heating, at a constant temperature rise rate, the thermally expandable graphite in an instrument which has a temperature regulating function and measures the force in the normal direction, such as a rheometer, and measuring the temperature at which the force in the normal direction rises up.

The content of the thermally expandable graphite in the fire-resistant layer is, in the case where the fire-resistant layer contains a binder described later, with respect to 100 parts by mass of the binder, preferably 3 to 150 parts by mass. By setting the content at 3 parts by mass or higher, suitable fire resistance can be imparted to the laminated body, whereby even when a fire breaks out, lowering of the bending strength and the like by burning of the FRP layer can be prevented. By setting the content at 150 parts by mass or lower, the binder in a certain amount can be contained in the fire-resistant layer, and the flexibility, the formability and the like of the fire-resistant layer become favorable. From the above viewpoints, the content of the thermally expandable graphite is, with respect to 100 parts by mass of the binder, more preferably 5 to 100 parts by mass, still more preferably 10 to 80 parts by mass and especially preferably 15 to 50 parts by mass.

### (Binder)

The fire-resistant layer preferably contains, in addition to the thermally expandable graphite, a binder. In the fire-resistant layer, it is preferable that the thermally expandable graphite is dispersed in the binder and is bound with the binder. Due to that the fire-resistant layer contains the binder, the mechanical strength, the formability and the like become favorable. The binder includes various kinds of resin components such as thermosetting resins, thermoplastic resins and elastomer components.

The fire-resistant layer is preferably a non-foam body, but may be a foam. In the case where the fire-resistant layer is a foam, the binder may contain cells therein.

Examples of the thermosetting resins include synthetic resins such as epoxy resins, urethane resins, phenol resins, urea resins, melamine resins, unsaturated polyester resins, alkyd resins and polyimide resins.

Examples of the thermoplastic resins include synthetic resins, such as polyolefin resins such as polypropylene resins (PP), polyethylene resins (PE), poly(1-)butene resins and polypentene resins, polystyrene resins, acrylonitrile-butadiene-styrene (ABS) resins, ethylene vinyl acetate copolymers (EVA), polyester resins, polycarbonate resins, polyphenylene ether resins, (meth)acrylic resins, polyamide resins, polyvinyl chloride resins (PVC), novolac resins, polyurethane resins and polyisobutylene resins.

The elastomer components include various rubber components such as natural rubber, isoprene rubber, butadien rubber, 1,2-polybutadiene rubber, styrene-butadiene rubber (SBR), chloroprene rubber (CR), nitrile rubber (NBR), butyl rubber, chlorinated butyl rubber, ethylene-propylene rubber (EPM), ethylene-propylene-diene rubber (EPDM), chlorosulfonated polyethylene, acrylic rubber, epichlorohydrin rubber, silicone rubber, fluororubber and urethane rubber.

Further, the elastomer components may be thermoplastic elastomers. The thermoplastic elastomers include thermoplastic olefinic elastomers (TPO), thermoplastic styrene-based elastomers, thermoplastic ester-based elastomers, thermoplastic amide-based elastomers, thermoplastic vinyl chloride-based elastomers and combinations of these.

From the viewpoint of making the fire resistance favorable and suppressing the ignition of the FRP layer more easily, the binder preferably has at least one functional group of a chloro group, a bromo group, a cyano group (nitrile group), an ester group, an acetyl group and an ether group, and more preferably has, among these, at least one of a chloro group and a bromo group.

Accordingly, from the viewpoint of making the fire resistance favorable and making the ignitability favorable, the binder is preferably a polyvinyl chloride resin (PVC), an ethylene vinyl acetate copolymer (EVA), a chloroprene rubber (CR), a nitrile rubber (NBR), or the like, and more preferably, among these, a polyvinyl chloride resin (PVC) or a chloroprene rubber (CR).

As binders other than the above binders having a functional group, from the viewpoint of formability and the like, polypropylene resins (PP), polyethylene resins (PE) and the like are also preferable.

Binders may be used singly in one kind, or in combination of two or more kinds.

### [Polyvinyl chloride resin (PVC)]

Examples of the polyvinyl chloride resin include polyvinyl chloride homopolymers, copolymers of a vinyl chloride monomer with a monomer copolymerizable with the vinyl chloride monomer and having an unsaturated bond, and graft copolymers made by graft copolymerizing vinyl chloride onto a polymer other than a vinyl chloride resin; and these may be used singly in one kind, or in combination of two or more kinds. Then, chlorinated polyvinyl chloride resins being chlorinated substances of polyvinyl chloride resins are also included in the polyvinyl chloride resin.

### [Ethylene vinyl acetate copolymer (EVA)]

As the ethylene vinyl acetate copolymer, for example, a copolymer of ethylene having a content of 50% by mass or higher with vinyl acetate can be used. In the ethylene vinyl acetate copolymer, the vinyl acetate content measured according to JIS K7192:1999 is preferably 10 to 50% by mass, more preferably 13 to 35% by mass and still more preferably 15 to 25% by mass. When the vinyl acetate content is not lower than the above lower limit value, the fire resistance becomes favorable. When the vinyl acetate content is in the above range, favorable formability and the like may be attained more easily.

### (Plasticizer)

The fire-resistant layer may contain, in addition to the thermally expandable graphite and binder, a plasticizer. When the fire-resistant layer contains the plasticizer, the flexibility and the formability are improved more easily and the adhesion of the fire-resistant layer with other layers (for example, the FRP layer, a resin layer described later and the like) becomes favorable more easily.

In the case of containing the thermoplastic resin as the binder, it is preferable that the fire-resistant layer contains the plasticizer, and in particular, in the case of using the vinyl chloride resin (PVC) as the binder, it is preferable that the fire-resistant layer contains the plasticizer. Here, the polyvinyl chloride resin including the plasticizer is called a soft polyvinyl chloride resin. Use of the soft polyvinyl chloride resin not only provides a favorable fire resistance, but also makes the formability, the flexibility, the adhesion with other layers (for example, the FRP layer or a resin layer), and the like favorable.

Examples of the plasticizer include phthalate ester plasticizers such as di-2-ethylhexyl phthalate (DOP), dibutyl phthalate (DBP), diheptyl phthalate (DHP) and diisodecyl phthalate (DIDP), aliphatic diesters such as di-2-ethylhexyl adipate (DOA), diisobutyl adipate (DIBA), dibutyl adipate (DBA), di-2-ethylhexyl azelate (DOZ), di-2-ethylhexyl sebacate (DOS), diisononyl adipate (DINA), diisodecyl adipate (DIDA) and bis[2-(2-butoxyethoxy)ethyl] adipate (BXA-N), fatty acid ester plasticizers such as adipic acid polyester, epoxidized ester plasticizers such as epoxidized soybean oil, trimellitate ester plasticizers such as tri-2-ethylhexyl trimellitate (TOTM) and triisononyl trimellitate (TINTM), and process oils such as mineral oil.

Plasticizers may be used singly in one kind, or in combination of two or more kinds.

In the case where the fire-resistant layer contains the plasticizer, the content of the plasticizer is, with respect to 100 parts by mass of the binder, preferably 1 to 60 parts by mass, more preferably 5 to 50 parts by mass and still more preferably 10 to 40 parts by mass. When the content of the plasticizer is in the above range, the formability, the fire resistance, the mechanical strength, the adhesion and the like may be favorable in a balanced manner.

In the fire-resistant layer, the total content of the plasticizer and the binder is, based on the total amount of the fire-resistant layer, preferably 50% by mass or higher, more preferably 60% by mass or higher and still more preferably 70% by mass or higher. The content of the plasticizer and binder that is not lower than a certain amount can make the formability, the flexibility, the adhesion with other layers and the like favorable. On the other hand, in order to contain the thermally expandable graphite not lower than a certain amount, the total content of the plasticizer and the binder is preferably 98% by mass or lower, more preferably 95% by mass or lower and still more preferably 92% by mass or lower. Here, the total content of the plasticizer and the binder, in the case of using no plasticizer, refers to a content of the binder.

### (Flame retardant)

The fire-resistant layer may contain a flame retardant. Due to containing the flame retardant, the fire resistance is improved.

Examples of the flame retardant include various phosphate esters such as triphenyl phosphate, tricresyl phosphate, trixylenyl phosphate, cresyl diphenyl phosphate and xylenyl diphenyl phosphate, phosphoric acid metal salts such as sodium phosphate, potassium phosphate and magnesium phosphate, phosphorous acid metal salts such as sodium phosphite, potassium phosphite, magnesium phosphite and aluminum phosphite, and ammonium polyphosphate and red phosphorus. The flame retardant also includes compounds represented by the following general formula (1).

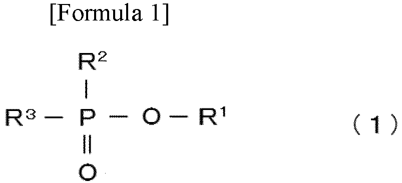

In the above general formula (1), R¹ and R³ are identical or different, and each denote hydrogen, a straight-chain or branched alkyl group having 1 to 16 carbon atoms, or an aryl group having 6 to 16 carbon atoms; and R² denotes a hydroxyl group, a straight-chain or branched alkyl group having 1 to 16 carbon atoms, a straight-chain or branched alkoxyl group having 1 to 16 carbon atoms, an aryl group having 6 to 16 carbon atoms or an aryloxy group having 6 to 16 carbon atoms.

Specific examples of the compounds represented by the above general formula (1) include methylphosphonic acid, dimethyl methylphosphonate, diethyl methylphosphonate, ethylphosphonic acid, n-propylphosphonic acid, n-butylphosphonic acid, 2-methylpropylphosphonic acid, t-butylphosphonic acid, 2,3-dimethyl-butylphosphonic acid, octylphosphonic acid, phenylphosphonic acid, dioctyl phenylphosphonate, dimethylphosphinic acid, methylethylphosphinic acid, methylpropylphosphinic acid, diethylphosphinic acid, dioctylphosphinic acid, phenylphosphinic acid, diethyl phenyl phosphinic acid, diphenylphosphinic acid and bis(4-methoxyphenyl)phosphinic acid. The flame retardants may be used singly in one kind, or in combination of two or more kinds.

As the flame retardant of the present invention, boron-based compounds and metal hydroxides can also be used.

The boron-based compounds include zinc borate.

Examples of the metal hydroxides include aluminum hydroxide, magnesium hydroxide, calcium hydroxide and hydrotalcite. In the case of using the metal hydroxide, water is produced by heat generated by combustion and quick fire extinguishing is done.

Among the above flame retardants, from the viewpoint of safety and costs, red phosphorus, phosphate esters such as triphenyl phosphate, aluminum phosphite, ammonium polyphosphate and zinc borate are preferable. Among these, aluminum phosphite and ammonium polyphosphate are more preferable.

The flame retardants listed in the above may be used singly in one kind, or in combination of two or more kinds; but it is preferable that the fire retardants are used singly in one kind and single use in one kind of aluminum phosphite is more preferable. Since the aluminum phosphite has expandability, the fire-resistant layer containing this easily raises the expanding pressure and it becomes easy for the fire resistance to be more effectively improved.

The mean particle diameter of the flame retardant is preferably 1 to 200 µm, more preferably 1 to 60 µm, still more preferably 3 to 40 µm and further still more preferably 5 to 20 µm. When the mean particle diameter of the flame retardant is in the above range, the dispersibility of the flame retardant in the fire-resistant layer is improved, enabling the flame retardant to be homogeneously dispersed in the resin and the amount of the flame retardant to be included in the resin to become larger. When the mean particle diameter is out of the above range, it becomes difficult for the flame retardant to be dispersed in the resin, making homogeneous dispersion thereof in the resin and inclusion thereof in a large amount difficult.

Here, the mean particle diameter of the flame retardant is a value of a median diameter (D50) measured by a laser diffraction/scattering type particle size analyzer.

The content of the flame retardant in the fire-resistant layer is, with respect to 100 parts by mass of the matrix component, preferably 1 to 120 parts by mass, more preferably 3 to 70 parts by mass and still more preferably 5 to 30 parts by mass. When the content of the flame retardant is not lower than these lower limit values, the fire resistance of the fire-resistant layer is improved. When the content of the flame retardant is not higher than these upper limit values, it becomes easy for the fire retardant to be homogeneously dispersed in the resin and the formability and the like become excellent.

### (Inorganic filler)

The fire-resistant layer may further contain an inorganic filler other than the flame retardant and the thermally expandable graphite.

The inorganic filler other than the flame retardant and the thermally expandable graphite is not especially limited, and examples thereof include metal oxides such as alumina, zinc oxide, calcium oxide, magnesium oxide, iron oxide, tin oxide, antimony oxide and ferrites, metal carbonate salts such as basic magnesium carbonate, calcium carbonate, magnesium carbonate, zinc carbonate, strontium carbonate and barium carbonate, and silica, diatomaceous earth, dawsonite, barium sulfate, talc, clay, mica, montmorillonite, bentonite, activated clay, sepiolite, imogolite, sericite, glass fibers, glass beads, silica-based balloons, aluminum nitride, boron nitride, silicon nitride, carbon black, graphite, carbon fibers, carbon balloons, charcoal powder, various kinds of metal powder, potassium titanate, magnesium sulfate, lead titanate zirconate, aluminum borate, molybdenum sulfide, silicon carbide, stainless steel fibers, various kinds of magnetic powder, slag fibers, fly ash and dehydrated sludge. These inorganic fillers may be used singly in one kind, or in combination of two or more kinds.

The inorganic filler is preferably metal oxides, metal carbonate salts and the like, and among these, more preferably calcium carbonate.

The mean particle diameter of the inorganic filler is preferably 0.5 to 100 µm and more preferably 1 to 50 µm. When the content of the inorganic filler is low, from the viewpoint of improving the dispersibility, the inorganic filler is preferably one having a small particle diameter; and when the content is high, since with the filling rate being higher, the viscosity of the fire-resistant layer becomes higher, deteriorating the formability of the fire-resistant layer, the inorganic filler is preferably one having a large particle diameter.

In the case where the flame -resistant layer contains the inorganic filler other than the fire retardant and the thermally expandable graphite, the content thereof is, with respect to 100 parts by mass of the resin, preferably 5 to 300 parts by mass, more preferably 10 to 200 parts by mass and still more preferably 15 to 80 parts by mass. When the content of the inorganic filler is in the above range, the mechanical properties of the fire-resistant layer can be improved.

The fire-resistant layer may contain components other than the above (referred to also as "other components"). The other components include various kinds of additive, such as antioxidants of phenol type, amine-type, sulfur-type or the like, metal harm inhibitors, antistatic agents, stabilizers, crosslinking agents, lubricants, softening agents and tackifiers.

The thickness of the fire-resistant layer is not especially limited, but is preferably 0.5 to 5 mm. The thickness not smaller than the above lower limit value impart suitable fire resistance more easily to the laminated body. The thickness not larger than the above upper limit value can prevent the laminated body from becoming thicker than necessary. The thickness of the fire-resistant layer is, from these viewpoints, more preferably 0.7 to 2.5 mm and still more preferably 1 to 1.5 mm.

### [Fiber-reinforced plastic layer (FRP layer)]

The fiber-reinforced plastic layer is composed of a fiber-reinforced plastic which contains a matrix resin and reinforcing fibers and in which the matrix resin is composited and unified with the reinforcing fibers.

As the matrix resin, a matrix resin which can usually be used for fiber-reinforced plastics is used and is not especially limited, and a thermoplastic resin may be used, or a thermosetting resin may be used.

The matrix resin specifically includes acrylic resins, polyester resins, urethane resins, epoxy resins, vinyl chloride resins, polyamide resins, polyimide resins, polyvinyl acetate resins, vinyl chloride-vinyl acetate copolymer resins, polyvinylidene chloride resins, polyethylene resins, polycarbonate resins, polyarylate resins, butyral resins, polystyrene resins, styrene-butadiene copolymer resins, polybutadiene resins, polyvinyl acetal resins, polyvinyl alcohol resins, cellulose resins, cellulose derivatives, diallyl phthalate resins, silicone resins, polysulfone resins, polyphenylene oxide resins, alkyd resins, styrene-maleic anhydride copolymer resins, phenol resins and paraffin wax. These matrix resins may be used singly in one kind, or in combination of two or more kinds.

The content of the matrix resin in the FRP layer is not especially limited, but is, for example, 10 to 90% by mass and preferably 20 to 80% by mass.

As the reinforcing fibers contained in the FRP layer, reinforcing fibers usually used for fiber-reinforced plastics can be used. The reinforcing fibers specifically include organic or inorganic fibers such as carbon fibers, glass fibers, aramid fibers, alumina fibers, boron fibers, Tyranno fibers and SiC fibers.

The form of the reinforcing fibers is not especially limited, and may be either of continuous fibers and discontinuous fibers, and may be a sheet form such as woven fabric, knitted fabric and nonwoven fabric.

In the FRP layer, the reinforcing fibers may be used singly in one kind, or in combination of two or more kinds.

Among the above, from the viewpoint of the usability for general purpose, the mechanical properties and the like, glass fibers (GF) and carbon fibers (CF) are preferable, and among these, from the viewpoint that the mechanical properties are high and the bending strength can be raised, carbon fibers are preferable. Accordingly, the FRP layer is preferably a carbon fiber-reinforced plastic (CFRP) layer or a glass fiber-reinforced plastic (GFRP) layer, and more preferably a CFRP layer.

The content of the reinforcing fibers in the FRP layer is not especially limited, but is, for example, 10 to 90% by mass and preferably 20 to 80% by mass.

The thickness of the FRP layer is not especially limited, but it is preferably larger than that of the fire-resistant layer, and is, with respect to the thickness of the fire-resistant layer, preferably 1 to 10 times, more preferably 2 to 10 times and still more preferably 5 to 10 times. In the laminated body, the FRP layer thicker than the fire-resistant layer can enhance the mechanical strength of the whole laminated body. On the other hand, the thickness of the FRP layer not larger than the above upper limit enables more easily the combustion of the FRP layer to be suitably prevented by the fire-resistant layer even when the laminated body is exposed to fire.

The specific thickness of the FRP layer is preferably 0.5 to 100 mm, more preferably 1 to 50 mm and still more preferably 3 to 20 mm. By setting the thickness of the FRP layer in the above range, the laminated body can suitably be used in various applications. Also by setting the thickness of the FRP layer not larger than the above upper limit value, even when the laminated body is in a bended state, the laminated body can suitably be used also as members for container protection, and the like.

The bending strength (bending elastic modulus) of the FRP layer is preferably 1 GPa or higher, more preferably 2.5 GPa or higher, still more preferably 10 GPa or higher, further still more preferably 20 GPa or higher and especially preferably 30 GPa or higher. The FRP layer with a higher bending strength can be used, for example, in a bended state for a long time without deterioration. The upper limit of the bending strength of the FRP layer is not especially limited, but is, for example, 200 GPa or lower and may be 100 GPa or lower.

Here, the bending strength can be determined by removing layers other than the FRP layer from the laminated body and measuring the bending elastic modulus of the simple body of the FRP layer. The specific measuring method of the bending strength is as indicated in Examples.

It is preferable that the FRP layer has a high bending strength even after the laminated body is exposed to fire for a certain period. Specifically, the bending strength (bending elastic modulus) of the FRP layer after a fire resistance test is preferably 1 GPa or higher, more preferably 2.5 GPa or higher, still more preferably 10 GPa or higher, further still more preferably 20 GPa or higher and especially preferably 30 GPa or higher. The upper limit of the bending strength of the FRP layer after the fire resistance test is not especially limited, but is, for example, 200 GPa or lower and may be 100 GPa or lower.

With making bending strength of the FRP layer after the fire resistance test higher, a laminated body becomes excellent in the fire resistance, and hardly causing the strength deterioration even on exposure to fire, therefore, for example, the laminated body can suitably be used also as protection members of containers accommodating dangerous goods, and the like.

Further, from the viewpoint of the fire resistance, the rate of the bending strength deterioration (strength deterioration rate) of the FRP layer by the fire resistance test is, with respect to the bending strength before the fire resistance test, preferably 50% or lower, more preferably 30% or lower and still more preferably 10% or lower. The lower the bending strength deterioration rate, the better; and 0% or higher thereof is allowed.

Here, the detail of the fire resistance test is as indicated in Examples described later.

### [Constitution of the laminated body]

The laminated body of the present invention may consist of the fire-resistant layer and the FRP layer, but may be provided with another layer (third layer) other than these. The third layer includes a base material layer, a resin layer, an adhesive layer or the like; and these layers may be used singly, or in combination of two or more.

### (Base material layer)

The base material layer is a layer to support the fire-resistant layer, and may be provided on at least one surface of the fire-resistant layer, and is preferably provided between the fire-resistant layer and the FRP layer. Of course, the base material layer may be provided on the opposite side (that is, the outer side of the fire-resistant layer) to the side provided with the FRP layer; in this case, the base material layer may constitute the outermost layer of the laminated body. The base material layer may be laminated directly on the fire-resistant layer, or may be laminated through another layer such as the resin layer or the adhesive layer.

The base material layer may be a combustible material layer, or may be a quasi-noncombustible material layer or a noncombustible material layer, but is, from the viewpoint of the fire resistance, preferably either of a quasi-noncombustible material layer or a noncombustible material layer, and preferably a noncombustible layer.

Examples of materials for the base material layer include one or two or more kinds of cloth materials, paper materials, wood materials, resin films, metals and inorganic materials. Among these, from the viewpoint that the base material layer can be used as a quasi-noncombustible material layer or a noncombustible material layer, metals, inorganic materials or combinations of these are preferable.

Specifically, the materials include woven fabrics or nonwoven fabrics composed of glass fibers, ceramic fibers, carbon fibers or graphite fibers. Further, the materials may be composite materials of these fibers and metals, and for example, aluminum glass cloths are preferable.

The composite material of fibers and a metal generally has a laminated structure of a metal layer and a fiber layer. Then, in the case where the base material layer having such a laminated structure is provided between the fire-resistant layer and the FRP layer, it is preferable that the metal layer is disposed on the FRP layer side and the fiber layer is disposed on the fire-resistant layer side.

When such a disposition is taken, even when the fire-resistant layer or the resin layer described later is laminated directly on the base material layer, the fire-resistant layer or the resin layer buried in parts of the fiber layer adheres itself more easily to the base material layer with a high adhesive force. On the other hand, by adhering the base material layer on the metal layer side thereof to the FRP layer through the adhesive layer, the FRP layer can be adhered to the base material layer with a high adhesive force.

The thickness of the base material is not especially limited, but is preferably 0.01 to 1 mm and more preferably 0.05 to 0.5 mm.

### (Resin layer)

By equipping the laminated body with the resin layer, it becomes easy for various properties such as flexibility, which cannot be attained by a single layer of the fire-resistant layer, to be imparted to the laminated body. It is preferable that the resin layer is provided, though not especially limited to, between the fire-resistant layer and the FRP layer. That is, it is preferable that the resin layer is disposed in the inside of the laminated body, which is closer to the FRP layer side than the fire-resistant layer. When the resin layer is thus disposed on the inner side of the fire-resistant layer, it becomes easy for flawing of the fire-resistant layer to be visually recognized as described later. Then, the resin layer may be laminated on the fire-resistant layer through another layer such as the adhesive layer, but is laminated preferably directly on the fire-resistant layer.

The resin layer is a layer constituted of a resin component such as a thermosetting resin, a thermoplastic resin or an elastomer component. The resin component to be used for the resin layer may be suitably selected from the components listed as resin components which can be used for the fire-resistant layer. Further, a suitable resin component in the resin layer is the same as in the above, and preferably has at least one functional group of a chloro group, a bromo group, a cyano group, an ester group, an acetyl group and an ether group, and preferably has, among these, at least one of a chloro group and a bromo group.

Accordingly, the resin to be used for the resin layer is, from the viewpoint of the fire resistance, preferably PVC, EVA, CR, NBR or the like, and among these, more preferably PVC or CR. Further, from the viewpoint of the formability, PP, PE or the like is also preferable.

The resin component in the resin layer may be used singly in one kind, or in combination of two or more kinds.

The resin component to be used for the resin layer is preferably a resin of the same kind as a resin component to be used for the fire-resistant layer. For example, when the resin component to be used for the resin layer is PVC, it is preferable that a resin component to be used for the fire-resistant layer is also PVC. That is, both of the resin to be used for the resin layer and the resin to be used for the fire-resistant layer are preferably PVC, EVA, CR, NBR, PP or PE, and among these, more preferably PVC or CR. When the resin component to be used for the fire-resistant layer and the resin component to be used for the resin layer are of the same kind, in the case where the resin layer is laminated directly on the fire-resistant layer, it becomes easy for the resin layer to be adhered to the fire-resistant layer.

The resin layer may contain a plasticizer. When the resin layer contains a plasticizer, it becomes easy for the flexibility and the formability to be improved and it also becomes easy for the adhesion to the fire-resistant layer and the like to become favorable. In the case where the resin to be used for the resin layer is a thermoplastic resin, it is preferable that the plasticizer is contained in the resin layer.

In particular, in the case where a polyvinyl chloride resin (PVC) is used as the binder, it is more preferable that the resin layer contains a plasticizer, that is, it is more preferable that in the resin layer, a soft polyvinyl chloride resin is used. Then, from the viewpoint of the fire resistance, the formability, the adhesion and the like, for either of the resin layer and the fire-resistant layer, use of the soft polyvinyl chloride resin is especially preferable.

The resin layer is a layer containing no thermally expandable graphite. Therefore, the resin layer is of non-thermal expansion, that is, does not expand by heating. Then, the resin layer may contain a colorant such as a pigment, a dye and the like to be colored with the colorant. The color of the coloration with the colorant is not especially limited, but colors other than black are preferable and particularly, white is preferable. In the case of coloring white, as the colorant, a well-known white colorant such as titanium oxide, calcium carbonate or silica can be used.

The fire-resistant layer becomes a black layer by containing the thermally expandable graphite as described above. On the other hand, in the case where the fire-resistant layer is on the outer side and the resin layer is on the inner side as described above, when parts of the fire-resistant layer take flaws penetrating the fire-resistant layer, the resin layer becomes enabled to be visible from the outside through the flaws. Accordingly, in the case where the resin layer is colored to a color other than black, when the fire-resistant layer is flawed, the color other than black can be visually recognized from the outside, whereby the fire-resistant layer being flawed becomes enabled to be easily visually recognized. In the case where the resin layer is colored white, the contrast is enhanced, whereby the fire-resistant layer being flawed becomes enabled to be much more easily visually recognized.

The resin layer may contain various components other than the above-mentioned components, such as additives. The additives to be used may be suitably selected from the list of additives to be used for the above-mentioned fire-resistant layer.

The thickness of the resin layer is not especially limited, but is preferably 0.1 to 3 mm and more preferably 0.1 to 0.5 mm.

### (Adhesive layer)

The adhesive layer to be used in the present invention may be constituted of a known adhesive agent, but the adhesive layer is preferably a pressure-sensitive adhesive layer constituted of a pressure-sensitive adhesive agent. Since the pressure-sensitive adhesive agent has pressure-sensitive adhesion, by laminating two layers through the pressure-sensitive adhesive agent, the two layers can easily be adhered.

The pressure-sensitive adhesive agent to be used for the pressure-sensitive adhesive layer is not especially limited, but includes acrylic ones, urethane-based ones and rubber-based ones. Then, the pressure-sensitive adhesive layer may be a single pressure-sensitive adhesive layer constituted of a pressure-sensitive adhesive agent, but may be a pressure-sensitive adhesive double coated tape having a base material and pressure-sensitive adhesive layers on both surfaces of the base material.

The adhesive layer may be used for adhering the base material layer and the FRP layer, or may be used for adhering the base material layer and the resin layer or the base material layer and the fire-resistant layer, but is used preferably for adhering the base material layer and the FRP layer. Accordingly, it is preferable that the adhesive layer is provided between the base material layer and the FRP layer.

The thickness of the adhesive layer is not especially limited, but is, for example, 1 to 500 µm, preferably 10 to 300 µm and more preferably 30 to 200 µm.

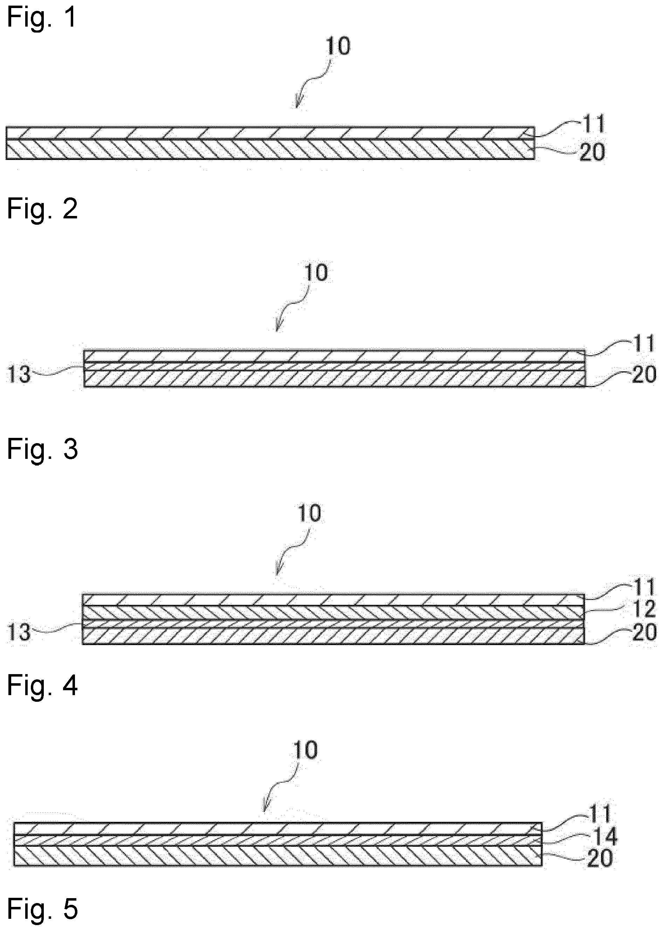

Figs. 1 to 8 show embodiments of laminated structures of the laminated body of the present invention. As shown in Fig. 1, in one preferred embodiment, the laminated body 10 may be composed of a fire-resistant layer 11 and an FRP layer 20. Furthermore, as shown in Fig. 2, the laminated body 10 may have a fire-resistant layer 11 and an FRP layer 20 adhered through an adhesive layer 13, and in one preferred embodiment, may have a laminated structure with the fire-resistant layer 11, the adhesive layer 13 and the FRP layer 20 disposed in this order.

In the case of a laminated structure in which the laminate 10 has a base material layer 12, it is preferable that the base material layer 12 is disposed between a fire-resistant layer 11 and an FRP layer 20 as described above, and it is more preferable that the base material layer 12 is adhered to the FRP layer 20 through an adhesive layer 13. Therefore, as shown in Fig. 3, in one preferred embodiment of the present invention, the laminated body 10 may have a laminated structure with the fire-resistant layer 11, the base material layer 12, the adhesive layer 13 and the FRP layer 20 disposed in this order.

In the case where the laminated body 10 takes a laminating structure having a resin layer 14, it is preferable that the resin layer 14 is disposed between a fire-resistant layer 11 and an FRP layer 20 as described above. Accordingly, in one preferred embodiment of the present invention, the laminated body 10 may have a laminated structure with the fire-resistant layer 11, the resin layer 14 and the FRP layer 20 disposed in this order, as shown in Fig. 4.

Further, in the case where the laminated body 10 takes a laminated structure having a base material layer 12 in addition to a resin layer 14, it is preferable that the resin layer 14 is disposed closer to a fire-resistant layer 11 than the base material layer 12. Accordingly, in one preferred embodiment of the present invention, the laminated body 10 may have a laminated structure with the fire-resistant layer 11, the resin layer 14, the base material layer 12, an adhesive layer 13 and an FRP layer 20 disposed in this order, as shown in Fig. 5.

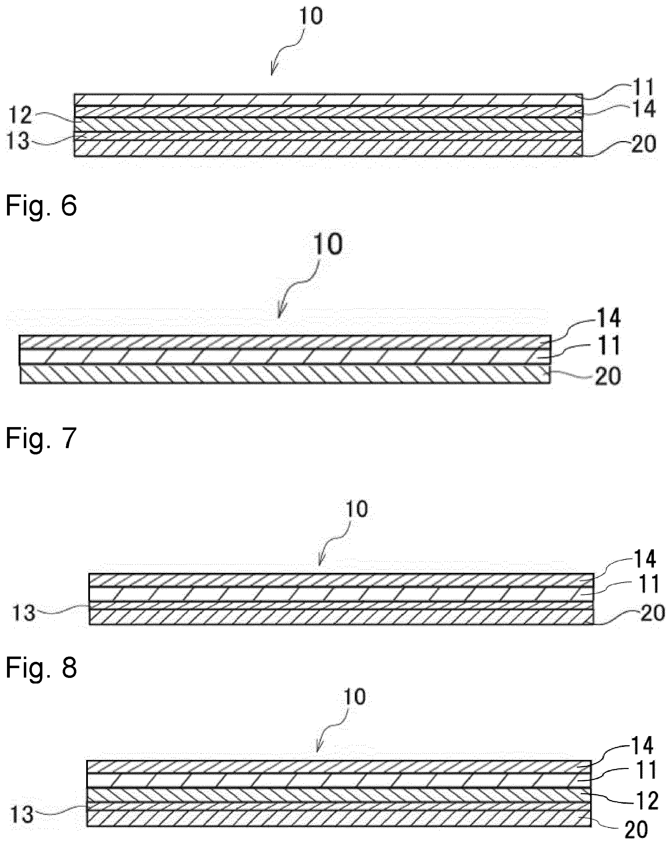

In the case where the laminated body 10 is a laminated body having a resin layer 14, a fire-resistant layer 11 may be disposed between the resin layer 14 and an FRP layer 20. Accordingly, in one preferred embodiment of the present invention, the laminated body 10 may have a laminated structure with the resin layer 14, the fire-resistant layer 11 and the FRP layer 20 disposed in this order, as shown in Fig. 6.

Then, in the case where the laminated body 10 is a laminated body having a resin layer 14 a fire-resistant layer 11 and an FRP layer 20 may be adhered through an adhesive layer 13, as shown in Fig. 7, and in one preferred embodiment, the laminated body 10 may have a laminated structure with the resin layer 14, the fire-resistant layer 11, the adhesive layer 13 and the FRP layer 20 disposed in this order.

In the case where the laminated body 10 has a laminated structure having a base material layer 12 in addition to a resin layer 14, it is preferable that the base material layer 12 is disposed between a fire-resistant layer 11 and an FRP layer 20, and it is more preferable that the base material layer 12 is adhered to the FRP layer 20 through an adhesive layer 13. Accordingly, in one preferred embodiment of the present invention, the laminated body 10 may have a laminated structure with the resin layer 14, the fire-resistant layer 11, the base material layer 12, the adhesive layer 13 and the FRP layer 20 disposed in this order, as shown in Fig. 8.

The laminated structures interpreted above and shown in Figs. 1 to 8 are examples of laminated structures of the laminated body, and the laminated structure is not limited to these.

The laminated body of the present invention, when being heated, can exhibit fire resistance by expansion of the fire-resistant layer. As an index to indicate the expansion amount of the laminated body in heating, there is the expansion height. The expansion height is a value obtained by measuring the maximum height in the laminated body after a fire resistance test, and subtracting the thickness of the laminated body before the fire resistance test from the maximum height.

From the viewpoint of the fire resistance, the expansion height of the laminated body after the fire resistance test is preferably not lower than a certain height, and specifically preferably 5 mm or higher, more preferably 10 mm or higher, still more preferably 20 mm or higher and further still more preferably 25 mm or higher. Then, from the viewpoint of the fire resistance, the higher the expansion height, the better, but from the viewpoints including prevention of the fire-resistant layer from becoming too thick, the expansion height may be, for example, 100 mm or lower, or may be 80 mm or lower.

### [Method for producing the laminated body]

The laminated body of the present invention can be produced by preparing the fire-resistant layer and the FRP layer and laminating these. First, a method for producing the fire-resistant layer will be described.

### (Method for producing the fire-resistant layer)

The fire-resistant layer can be produced, for example, by preparing a composition for the fire-resistant layer containing a thermally expandable graphite, and forming the composition for the fire-resistant layer into a sheet shape.

The composition for the fire-resistant layer, in the case where the fire-resistant layer contains a binder, can be prepared by suitably mixing the binder, the thermally expandable graphite and further, optional components to be included as required. Mixing the components may be carried out under heating, when necessary, but in this case, the heating temperature may be controlled lower than the expansion starting temperature of the thermally expandable graphite.

In the preparation of the composition for the fire-resistant layer, an apparatus to be used for mixing the components is not especially limited, but there can be used a single-screw extruder, a twin-screw extruder, a Banbury mixer, a kneader mixer, a kneading roll, a mortar machine, a planetary stirrer, a stirrer equipped with a stirring blade, and the like.

In the case of using a thermosetting resin composed of a base resin and a hardener, the base resin and the hardener may be previously separately prepared and may be mixed by a static mixer, a dynamic mixer or the like right before formation.

The composition for the fire-resistant layer may be diluted with an organic solvent to make a slurry or the like, but no use of the organic solvent is preferable because of no need of a step of removing the organic solvent.

The method of forming the composition for the fire-resistant layer into a sheet shape to obtain the fire-resistant layer is not especially limited, but preferably involves applying and forming the composition for the fire-resistant layer on a base material or a release film having been subjected to release treatment, so as to make a desired thickness. Alternatively, the composition for the fire-resistant layer may be formed into a sheet shape by extruding the composition for the fire-resistant layer from an extruder such as a single-screw extruder or a twin-screw extruder. At this time, the composition for the fire-resistant layer may be extruded on the base material or the release film.

In the case where the fire-resistant layer is formed on the base material or the release film, the base material or the release film may be peeled off from the fire-resistant layer obtained, but in the case of the base material, the base material may be used as it is as a base material layer.

In the case where the composition for the fire-resistant layer uses, as the binder, a thermosetting resin or a rubber component, the composition may be hardened or vulcanized during the formation into a sheet shape or after the formation, and for example, the composition can be heated and hardened after the composition is poured into a mold or applied. In the case where the composition for the fire-resistant layer is diluted with a solvent, the composition may be heated and thereby dried after the application.

Further, in the case where the fire-resistant layer is a foam, the foam can be fabricated by containing a foaming agent in the composition for the fire-resistant layer and foaming the composition for the fire-resistant layer during the formation of the composition into a sheet shape or after the formation thereof into a sheet shape, or during the hardening thereof or the vulcanization thereof.

By laminating the fire-resistant layer produced as described above on the FRP layer separately prepared, the laminated body can be obtained. In a method of obtaining the laminated body, the laminated body can be produced, for example, by superposing the fire-resistant layer and the FRP layer, and adhering these by press heating or the like.

In the case of equipping the resin layer, the base material layer, the adhesive layer and the like as the third layer other than the fire-resistant layer and the FRP layer, the laminated body may be fabricated by previously preparing the resin layer, the base material layer, the adhesive layer and the like, and superposing these together with the fire-resistant layer and the FRP layer, and adhering these mutually by press heating or the like.

For example, in the case of equipping the resin layer, the resin layer can be fabricated by extrusion, application or the like, but the resin layer may be extruded together with the fire-resistant layer by coextrusion to obtain a laminated material of the resin layer and the fire-resistant layer, and the laminated material may be superposed on the FRP layer. Then, the laminated material or the resin layer, similarly to the fire-resistant layer, may be formed on a base material, and in this case, the base material may be used as it is as the base material layer.

In the case of using the base material as it is as the base material layer, the laminated material formed on the base material, the resin layer, the fire-resistant layer and the like may be superposed on the FRP layer.

Further, for example, in the case of providing the adhesive layer, the adhesive layer may be formed on the base material layer or the FRP layer by applying or treating otherwise an adhesive agent or a pressure-sensitive adhesive agent on the base material layer, the FRP layer or the like, and the laminated body can be produced by superposing the base material layer or FRP layer having the adhesive layer formed thereon on the FRP layer, the fire-resistant layer or the like.

### [Applications of the laminated body]

The laminated body of the present invention can be used without restrictions as long as applications of the laminated body are those capable of using FRP and demanding the fire resistance, for example, in various vehicles such as aircrafts, automobiles, railroad cars and ships, various production facilities such as chemical plants and steel plants, and various buildings.

Further, the laminated body of the present invention can be used also as members for container protection, and for example, may be disposed on outer peripheral surfaces of containers accommodating dangerous goods such as flammable substances and explosive substances, and protect the containers. The containers may cross-sectionally have any of circular, square and rectangular shapes, but the laminated body may be used by being bended after the shapes of the outer peripheral surfaces of the containers. In the case where the laminated body is disposed on the outer peripheral surface of a container, from the viewpoint of the fire resistance, it is preferable that the FRP layer is disposed in the inner side and the fire-resistant layer is disposed in the outer side.

### Examples

Hereinafter, the present invention will be described in more detail by way of Examples, but the present invention is not any more limited to these Examples.

Evaluation methods in the present Examples and Comparative Examples were as follows.

### <Bending strength and fire resistance>

The bending elastic modulus of an FRP layer was measured by using a sample of the FRP layer of 80 mm × 10 mm at a rate of 2 mm/min according to ISO 178, and taken as a bending strength of the FRP layer before a fire resistance test.

Then, after the fire resistance test described later, layers other than the FRP layer in a laminated body were removed, and the bending elastic modulus was measured by using the FRP layer by the same method as in the above, and taken as a bending strength after the fire resistance test. The proportion in the deterioration amount of the bending strength after the fire resistance test to the bending strength before the fire resistance test was calculated as a strength deterioration rate.

### (Fire resistance test)

A laminated body was cut out into a 50 mm square, and installed on a fixing jig. Then, a gas burner was set in a state that the mouth of the burner was directed downward at the position of 50 mm from the surface in the thickness direction of the laminated body. Once, the fixing jig was moved to a place where the flame of the gas burner did not hit the laminated body; and the entire length of the flame of the gas burner (inner diameter: 9.5φ, methane gas) was regulated at 80 mm and the air amount was regulated at the maximum. Then, the fixing jig was installed in the center of the flame of the gas burner, and held for 5 min in a state that the flame was applied on the surface of the laminated body (surface on the fire-resistant layer side); thereafter, the fixing jig was moved away to a place where the flame did not hit the laminated body.

### (Rating criteria of the fire resistance)

The fire resistance was rated by a value of the strength deterioration rate of the bending elastic modulus after the fire resistance test, and additionally visual check of the occurrence/nonoccurrence of ignition by whether flame spread on a test body during the fire resistance test.
A: The strength deterioration rate of the bending elastic modulus after the fire resistance test was lower than 50%, and flame spread was not recognized.
B: The strength deterioration rate of the bending elastic modulus after the fire resistance test was held at lower than 50%, but flame spread was recognized.
C: The deterioration rate of the bending elastic modulus after the fire resistance test was 50% or higher.

### <Expansion height>

The maximum height of a laminated body after the fire resistance test was measured, and a value obtained by subtracting an original height from the maximum height was taken as an expansion height.

Each component used in Examples and Comparative Examples were as follows.
(Binders in fire-resistant layers and resin layers)
PVC: trade name "TK1000" (manufactured by Shin-Etsu Chemical Co. Ltd.)
PE: LDPE: manufactured by Japan Polyethylene Corp., "Navatec LE520H"
PP: manufactured by Prime Polymer Co. Ltd., "Prime PP S135"
EVA: an ethylene vinyl acetate copolymer, trade name "Evaflex EV460", manufactured by Du Pont-Mitsui Polychemicals Co. Ltd., vinyl acetate content: 19% by mass
CR: manufactured by Tosoh Corp., "Skyprene TSR-56"
NBR: manufactured by Zeon Corp., "Nipol 1043"
SBR: manufactured by JSR Corp., "JSR 1500"

(Thermally expandable graphite)
manufactured by ADT Co. Ltd., "ADT 351", expansion starting temperature: 200°C (Inorganic filler)
Calcium carbonate: trade name "Whiton BF-300", manufactured by Bihoku Funka Kogyo Co. Ltd.

### (Flame retardant)

Aluminum phosphite: trade name "NSF", manufactured by Taihei Chemical Industrial Co. Ltd.

### (Plasticizer)

DIDP: diisodecyl phthalate, trade name "DIDP", manufactured by J-Plus Co. Ltd.

### (Base material layer)

Aluminum glass cloth, thickness: 0.14 mm

### (Adhesive layer)

Pressure-sensitive adhesive agent: an acrylic pressure-sensitive adhesive agent

### (FRP layer)

CF: manufactured by Toray Industries, Inc. "Toreca Cloth CO6343"
GF: manufactured by Corning Inc. "ADVANTEX"
Matrix resin: an epoxy resin, manufactured by Tohto Kasei Co. Ltd. "YD128"
Catalyst: manufactured by Shikoku Chemicals Corp., 2-methylimidazole
Alcohol: manufactured by Tokyo Chemical Industry Co., Ltd., isopropyl alcohol

### [Examples 1 to 14]

In each Example, according to a formulation described in Table 1, components constituting a fire-resistant layer are fed to a single-screw extruder, and extruded at 150°C to obtain the fire-resistant layer composed of a composition for the fire-resistant layer delivered from a roll. Then, in order to obtain an FRP layer, 3 parts by mass of the catalyst and 3 parts by mass of the alcohol were mixed and dissolved at 70°C; and 100 parts by mass of the epoxy resin was further added and kneaded at 70°C to obtain an epoxy composition. Thereafter, CF or GF was placed in a mold; and the epoxy composition was pressure injected at an injection pressure of 0.2 MPa into the mold under a reduced pressure condition of the ambient pressure -0.1 MPa to be impregnated in the CF or GF to thereby obtain a CFRP or GFRP (FRP layer) of 4 mm in thickness. The obtained fire-resistant layer and FRP layer were superposed and compression bonded by hot press to thereby obtain a laminated body having a laminated structure of fire-resistant layer/FRP layer.

### [Example 15]

A laminated body having a laminated structure of fire-resistant layer/adhesive layer/FRP layer was obtained by the same procedure as in Example 1, except for applying the pressure-sensitive adhesive agent on a fire-resistant layer obtained by the same method as in Example 1 to form an adhesive layer of 50 µm in thickness, and laminating the fire-resistant layer on the FRP layer.

### [Example 16]

A fire-resistant layer obtained by the same method as in Example 1 was superposed on the glass cloth side surface of the aluminum glass cloth, and hot pressed. Thereafter, a laminated body having a laminated structure of fire-resistant layer/base material layer/adhesive layer/FRP layer was obtained by the same procedure as in Example 1, except for applying the pressure-sensitive adhesive agent on the aluminum layer side surface of the aluminum glass cloth to form an adhesive layer of 50 µm in thickness, and adhering the base material layer on the FRP layer through the adhesive layer.

### [Example 17]

A laminated body having a laminated structure of fire-resistant layer/resin layer/FRP layer was obtained by superposing the resin layer having a thickness of 0.5 mm and composed of a single material of PVC, and the FRP layer on the fire-resistant layer, and compression bonding the resultant by hot press. Here, the fire-resistant layer and the FRP layer were obtained by the same method as in Example 1.

### [Comparative Examples 1 and 2]

The FRP layer as a simple body was evaluated for the different tests in place of the laminated bodies.

### [Comparative Example 3]

A laminated body having a laminated structure of resin layer/FRP layer was obtained by the same procedure as in Example 1, except for using the resin layer having a thickness of 1 mm and composed of PVC in place of the fire-resistant layer, and the obtained laminated body was evaluated for the different tests.

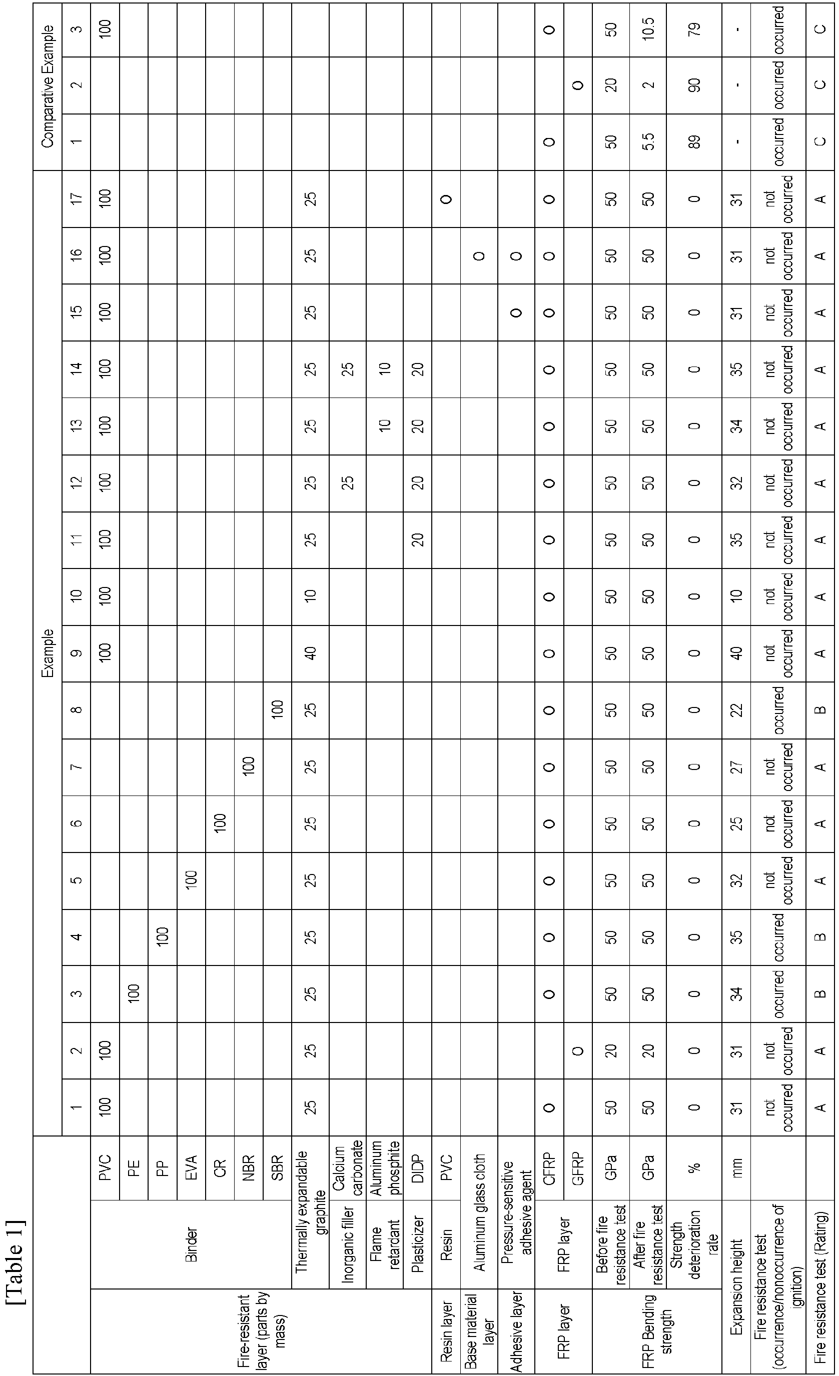

In the above laminated bodies of Examples 1 to 17, due to having, in addition to an FRP layer, a fire-resistant layer containing thermally expandable graphite, in the fire resistance test, no ignition occurred on the FRP layer; and even when ignition occurred, the ignition was in a practically acceptable level, and on exposure to fire, the deterioration of the bending strength could sufficiently be suppressed.

By contrast, in the laminated bodies of Comparative Examples 1 to 3, which had no fire-resistant layer and had a resin layer in place of the fire-resistant layer, in the fire resistance test, the FRP layer ignited; and the deterioration of the bending strength in the fire resistance test became remarkable and on exposure to fire, the deterioration of the bending strength could not sufficiently be suppressed.

### Reference Signs List

- 10: LAMINATED BODY
- 11: FIRE-RESISTANT LAYER
- 12: BASE MATERIAL LAYER
- 13: ADHESIVE LAYER
- 14: RESIN LAYER
- 20: FIBER-REINFORCED PLASTIC LAYER (FRP LAYER)

## Claims

1. A laminated body having a multilayer structure of two or more layers, the laminated body comprising: a fire-resistant layer comprising a thermally expandable graphite; and a fiber-reinforced plastic layer.

2. The laminated body according to claim 1, wherein reinforcing fibers contained in the fiber-reinforced plastic layer are at least one kind selected from the group consisting of carbon fibers and glass fibers.

3. The laminated body according to claim 1 or 2, wherein the laminated body has an expansion height after a fire resistance test of 5 mm or higher.

4. The laminated body according to any one of claims 1 to 3, wherein the fire-resistant layer further comprises a binder.

5. The laminated body according to claim 4, wherein the binder has at least one functional group selected from the group consisting of a chloro group, a bromo group, a cyano group, an ester group, an acetyl group and an ether group.

6. The laminated body according to claim 4, wherein the binder has at least one functional group selected from the group consisting of a chloro group and a bromo group.

7. The laminated body according to any one of claims 1 to 6, wherein the laminated body further comprises at least one of a resin layer, an adhesive layer and a base material layer.
